# FASCICULE DE BREVET EUROPEEN

(11) **EP 3 892 895 B1**
(45) Date de publication et mention de la délivrance du brevet: **02.04.2025**
(21) Numéro de dépôt: 21167490.8
(22) Date de dépôt: 08.04.2021
(51) Int. Cl.: F16H 57/08

(54) **REDUCTEUR MECANIQUE DE TURBOMACHINE D'AERONEF**
MECHANISCHES REDUKTIONSGETRIEBE FÜR TURBOTRIEBWERK EINES LUFTFAHRZEUGS
MECHANICAL GEAR FOR AIRCRAFT TURBINE ENGINE

(30) Priorité: 10.04.2020 FR 2003609
(43) Date de publication de la demande: 13.10.2021
(73) Titulaire: Safran Transmission Systems, 92700 Colombes (FR)
(72) Inventeur: SIMON, Adrien Louis, 77550 MOISSY-CRAMAYEL (FR); LEFEBVRE, Simon Loïc Clément, 77550 MOISSY-CRAMAYEL (FR)
(74) Mandataire: Gevers & Orès

(56) Documents cités:
- FR-A1- 3 011 901
- US-A1- 2010 292 043
- US-A1- 2017 122 407

## Description

### Domaine technique de l'invention

La présente invention concerne le domaine des réducteurs mécaniques pour des turbomachines en particulier d'aéronef, et en particulier les réducteurs équipés de satellites à double étage d'engrènement.

### Arrière-plan technique

L'état de l'art comprend notamment les documents WO-A1-2010/092263, FR-A1-2 987 416, FR-A1-3 011 901, FR-A1-3 041 054, FR-A1-3 058 493, US-A1-2017/122407 et US-A1-2010/292043.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent et sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés de un ou plusieurs étages d'engrènement. Cet engrènement est assuré de différentes façons comme par contact, par friction ou encore par champs magnétique.

Dans la présente demande, on entend par « étage » ou « denture », une série de dents d'engrènement avec une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures ou deux séries de dents qui sont situées sur des diamètres différents. Une première denture coopère avec le solaire et une seconde denture coopère avec la couronne.

Une des problématiques d'un réducteur mécanique concerne le risque de désalignements des satellites. Cette problématique est amplifiée dans le cas de satellites à double étage car les reprises d'effort dans la couronne et le porte-satellites sont plus complexes du fait que les dentures sont situées dans deux plans différents perpendiculaires à l'axe du porte-satellites.

La couronne subit des efforts en direction radiale et en direction axiale qui peuvent être importants et qui doivent être limités pour éviter des déplacements de la couronne en utilisation du réducteur.

Il existe donc un besoin d'améliorer la transmission des efforts subis par une couronne dans un réducteur mécanique équipé de satellites à double étage d'engrènement.

### Résumé de l'invention

L'invention concerne un réducteur mécanique de turbomachine, en particulier d'aéronef, ce réducteur comportant :
- un solaire ayant un axe de rotation et comportant une denture externe,
- une couronne qui s'étend autour du solaire et qui comporte une denture interne, la couronne étant entourée par un porte-couronne qui est destiné à être immobile en rotation autour de l'axe en utilisation,
- des satellites qui sont engrenés avec le solaire et la couronne et qui comportent chacun une première denture de diamètre moyen D2 engrené avec la denture du solaire, et une seconde denture de diamètre moyen D1, différent de D2, engrené avec la denture interne de la couronne, les satellites étant maintenus par un porte-satellites qui est destiné à être mobile en rotation autour de l'axe en utilisation,
le porte-couronne comprenant une butée axiale annulaire sur laquelle la couronne est configurée pour prendre appui, et la couronne comprenant des cannelures externes hélicoïdales qui sont engagées dans des cannelures internes complémentaires du porte-couronne et qui sont configurées pour coopérer par glissement avec ces cannelures internes de façon à forcer le maintien de la couronne contre la butée en fonctionnement.

Le réducteur selon l'invention est ainsi conçu pour reprendre le couple et les efforts axiaux auxquels est soumise la couronne en fonctionnement. Du fait de la présence des cannelures, la couronne est apte à se déplacer axialement en fonctionnement. Grâce à l'orientation des cannelures hélicoïdales, qui dépend du sens de rotation des satellites autour de l'axe, ce déplacement est dirigé vers la butée afin que la couronne soit forcée de prendre appui contre cette butée et donc à conserver cette position axiale en fonctionnement. La couronne est donc immobilisée axialement contre cette butée du fait de la coopération des cannelures. Le couple et les efforts axiaux soumis à la couronne sont donc transmis via cette butée au porte-couronne qui peut les transmettre à son tour à un stator de la turbomachine.

Cette invention est compatible :
- d'un réducteur double étage,
- d'un réducteur dit épicycloïdal, c'est-à-dire dont la couronne est fixe dans le repère moteur,
- de dentures droites ou hélicoïdales,
- de tout type de porte-satellites qu'il soit monobloc ou de type cage et porte-cage,
- de tout type de palier satellite, qu'il soit composé d'éléments roulants, d'un palier hydrodynamique, etc.

Le réducteur selon l'invention peut comprendre une ou plusieurs des caractéristiques suivantes, prises isolément les unes des autres, ou en combinaison les unes avec les autres :
- le porte-couronne comprend un support de palier monté sur une portion d'arbre du porte-satellites, le support de palier recevant un palier de guidage en rotation de la portion d'arbre du porte-satellites ;
- la butée et la portion d'arbre sont situés d'un même côté par rapport aux satellites ;
- le porte-couronne comprend une paroi cylindrique comportant lesdites cannelures internes et une paroi tronconique dont l'extrémité de plus grand diamètre est reliée à cette paroi cylindrique, ladite butée étant située dans une zone de liaison des parois tronconique et cylindrique ;
   -- le palier à roulement est situé au niveau de l'extrémité de plus petit diamètre du porte-couronne ;
- la paroi cylindrique est reliée à un rebord annulaire s'étendant radialement vers l'extérieur et formant une bride de fixation ;
- le rebord annulaire s'étend dans un plan perpendiculaire audit axe qui passe sensiblement par le milieu de la couronne et par le milieu d'un palier, par exemple à roulement, monté entre le porte-satellites et le solaire ;
- la butée est formée par un bossage annulaire radialement interne du porte-couronne ;
- le bossage comprend une face radiale d'appui de la couronne ;
- la face radiale est reliée aux cannelures internes du porte-couronne par une rainure annulaire ;
- la face radiale est recouverte d'un revêtement de protection ou est destinée à coopérer avec un revêtement de protection situé sur la couronne ;
- le porte-couronne comprend un amortisseur à compression de film d'huile qui entoure au moins en partie ladite couronne ;
- du côté opposé à la butée, la couronne est maintenue axialement vis-à-vis du porte-couronne par l'intermédiaire d'un anneau fendu de verrouillage qui est engagé dans une gorge annulaire radialement interne du porte-couronne ;
- la gorge et l'anneau sont situés au niveau d'une extrémité axiale libre du porte couronne, et en particulier de sa paroi cylindrique ;
- les cannelures internes du porte-couronne et les cannelures externes de la couronne s'étendent sur toute la dimension axiale de la couronne.

La présente invention concerne encore une turbomachine d'aéronef, comportant un réducteur tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en coupe axiale d'une turbomachine d'aéronef,
[Fig.2] la figure 2 est une section axiale en vue partielle d'un réducteur mécanique,
[Fig.3] la figure 3 est une vue schématique en coupe axiale d'un réducteur mécanique équipé de satellites à double étage d'engrènement, et illustre la technique antérieure à l'invention,
[Fig.4] la figure 4 est une vue schématique en perspective du porte-satellites du réducteur de la figure 3,
[Fig.5] la figure 5 est une vue schématique en coupe axiale d'un réducteur mécanique équipé de satellites à double étage d'engrènement, et illustre un mode de réalisation de l'invention,
[Fig.6] la figure 6 est une vue schématique à plus grande échelle d'une partie de la figure 5, et
[Fig.7] la figure 7 est une vue schématique partielle en perspective du réducteur de la figure 5.

### Description détaillée de l'invention

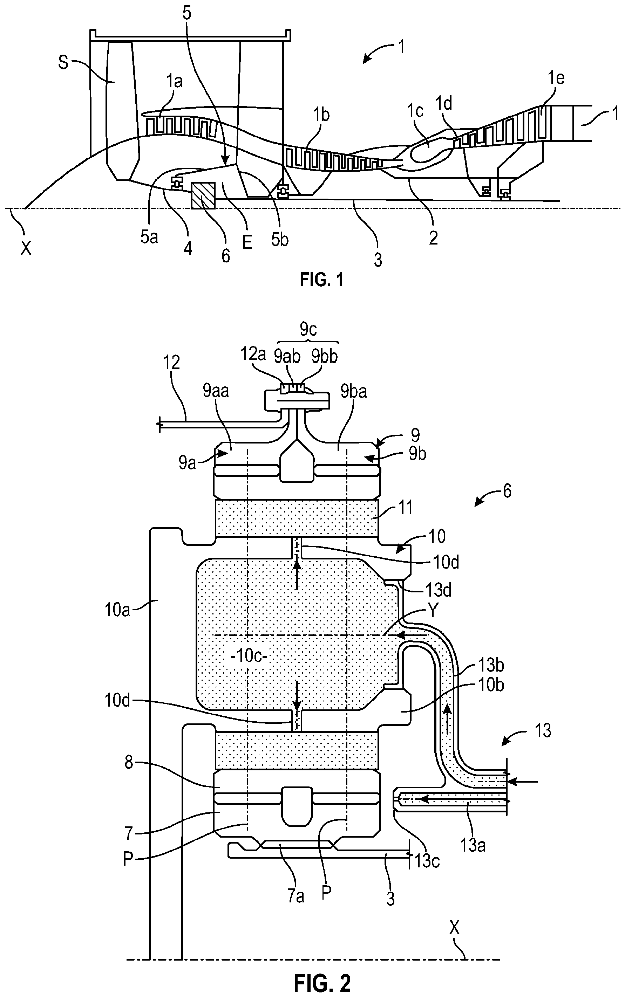

La figure 1 décrit une turbomachine 1 qui comporte, de manière classique, un axe de rotation X, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

La description qui suit concerne un réducteur du type planétaire dans lequel la couronne est mobile en rotation.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des étanchéités au niveau d'un palier permettant la traversée de l'arbre de soufflante 4, et en aval par des joints au niveau de la traversée de l'arbre BP 3.

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.
▪ Dans cette configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange les axes 10b et le châssis 10a peuvent être séparés en plusieurs pièces.

Pour les mêmes raisons citées précédemment, la denture d'un réducteur peut être séparée en plusieurs hélices présentant chacun un plan médian P. Dans l'exemple représenté, la couronne est séparée en deux demi-couronnes:
▪ une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
▪ une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur est séparé en 2 parties en général chacune répétée du même nombre de satellite. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

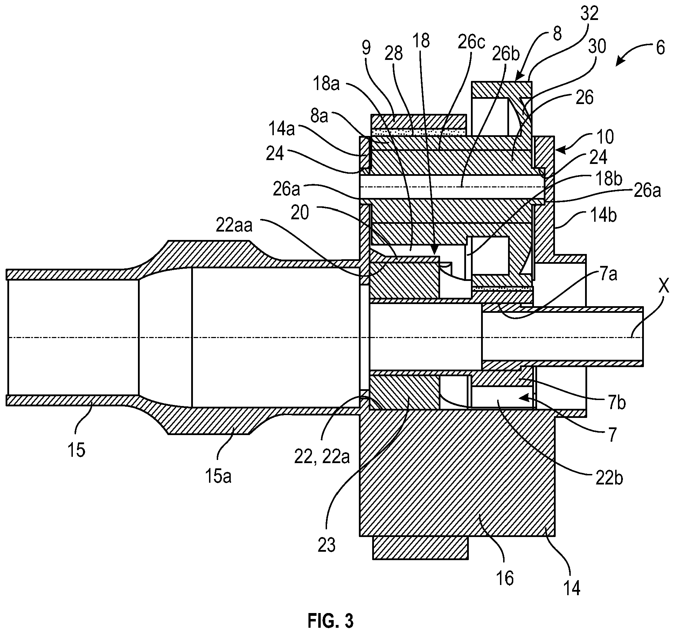

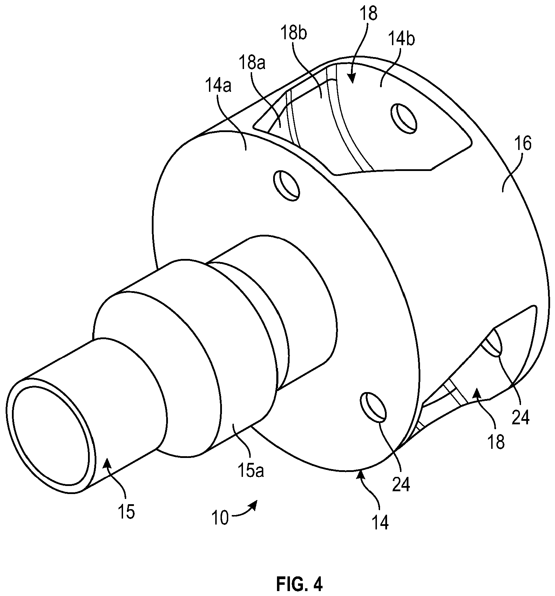

Les figures 3 et 4 représentent un réducteur 6 de turbomachine d'aéronef selon la technique antérieure.

Le réducteur 6 comprend un porte-satellites 10 qui est configuré pour être mobile en rotation autour de l'axe X et qui est du type monobloc, c'est-à-dire formé d'une seule pièce.

Ce porte-satellites 10 comprend une cage 14 et une portion d'arbre 15.

La portion d'arbre 15 a une forme générale tubulaire et allongée le long de l'axe X et comprend une extrémité longitudinale libre, ici à gauche sur les dessins, et une extrémité longitudinale opposée de liaison à la cage 14.

La portion d'arbre 15 comprend une denture externe 15a d'engrènement, par exemple avec une soufflante.

La cage 14 comporte deux flasques annulaires 14a, 14b qui sont parallèles et à distance l'un de l'autre et s'étendent perpendiculairement à l'axe X. Les flasques 14a, 14b ont une forme générale circulaire et sont centrées sur l'axe X.

Le flasque 14a, appelé premier flasque, à gauche sur le dessin, est relié à la portion d'arbre 15. L'autre flasque 14b est appelé second flasque.

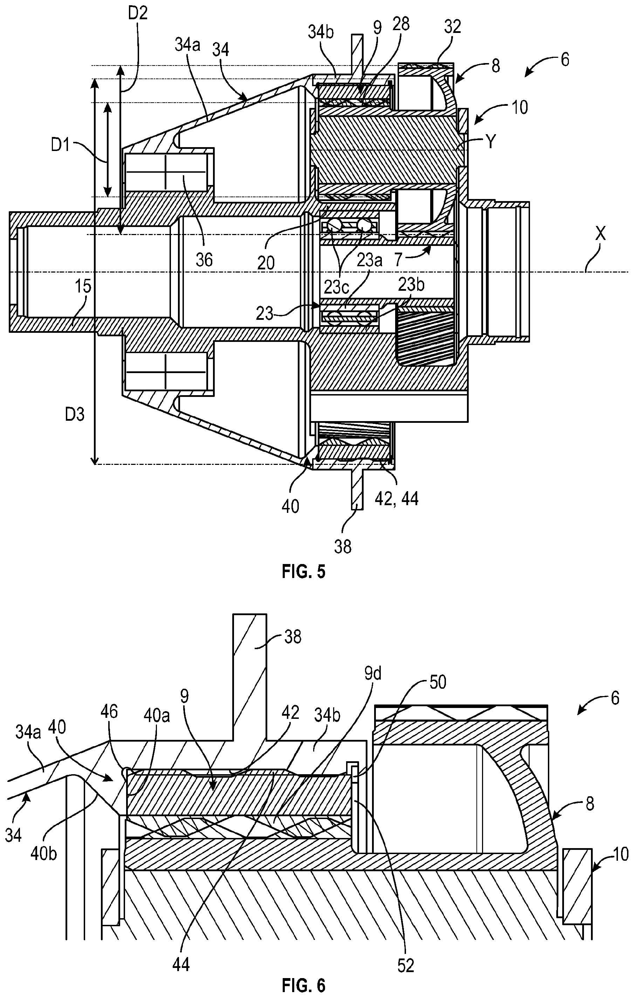

Les flasques 14a, 14b sont reliés entre eux par des ponts de matière 16 qui définissent entre eux et avec les flasques des logements 18 configurés pour recevoir les satellites 8. Les logements 18 débouchent radialement vers l'extérieur à la périphérie externe de la cage 14, et débouchent également radialement à l'intérieur en traversant une paroi tubulaire interne 20 de la cage 14. Les ponts de matière 16 peuvent être pleins ou en partie évidés, comme illustré à la figure 5.

La paroi 20 s'étend autour de l'axe X, depuis le premier flasque 14a en direction du second flasque 14b. Elle s'étend ici sensiblement dans le prolongement axial de la portion d'arbre 15. Cette paroi 20 délimite intérieurement un espace 22 de logement du solaire 7.

Cet espace 22 comprend deux parties adjacentes. La première partie 22a est entourée par la paroi 20 qui comprend une surface cylindrique interne 22a de montage d'un palier 23 de guidage d'une extrémité du solaire 7. La seconde partie 22b, située au niveau des débouchés des logements 18, reçoit l'extrémité opposée du solaire 7, qui comprend une denture externe 7b d'engrènement avec les satellites 8. Le solaire 7 comprend en outre une denture interne 7a d'accouplement à un arbre par exemple de turbine.

Les logements 18 comportent chacun une première partie 18a qui est située du côté du premier flasque 14a, et une seconde partie 18b qui est située du côté du second flasque 14b. Les logements 18 débouchent à la périphérie externe de la cage 14, au niveau de ses deux parties 18a, 18b, et à la périphérie interne de la cage 14, au niveau des secondes parties 18b seulement.

Les flasques 14a, 14b comprennent des trous ou orifices 24 alignés de montage des satellites 8 et en particulier de paliers lisses 26 de ces satellites 8. Chaque palier 26 a une forme générale cylindrique qui s'étend parallèlement à l'axe X et dont les extrémités longitudinales comprennent des extensions 26a logées dans les orifices 24 formant des sièges.

De façon connue, chaque palier 26 peut comprendre un alésage interne 26b de circulation d'huile qui communique en général avec des conduits d'amenée d'huile jusqu'à la surface cylindrique externe 26c du palier en vue de la formation d'un film d'huile sur cette surface 26c.

Les satellites 8 sont du type à double étage d'engrènement, comme évoqué dans ce qui précède, et comprennent chacun un corps tubulaire 8a équipé d'une première denture 28 externe et relié par un voile 30 à une seconde denture 32 externe.

Les dentures 28, 32 sont disposées à côté l'une de l'autre et plus particulièrement sont situées respectivement dans deux plans perpendiculaires à l'axe X.

La première denture 28, située à gauche sur les dessins, est située du côté du premier flasque 14a et donc au niveau de la première partie 18a du logement. Comme cela est visible à la figure 3, cette denture 28 est engrenée avec la couronne 9.

La seconde denture 32, située à droite sur les dessins, est située du côté du second flasque 14b et donc au niveau de la seconde partie 18b du logement. Comme cela est visible à la figure 3, cette denture 32 est engrenée avec la denture 7b du solaire 7.

Comme on le voit à la figure 3, les ponts de matière 16 s'étendent radialement, entre les logements 18, depuis la paroi 20 et la périphérie interne des flasques 14a, 14b jusqu'à la périphérie externe des flasques.

La couronne 9 est portée par un porte-couronne qui n'est pas représenté dans les dessins.

L'invention propose une solution pour garantir la reprise du couple et des efforts axiaux auxquels est soumise la couronne 9 en fonctionnement, par le porte-couronne.

Les figures 5 à 7 illustrent un mode préféré de réalisation d'un réducteur 6 selon l'invention. Ce réducteur 6 comprend l'ensemble des caractéristiques décrites dans ce qui précède en relation avec les figures 3 et 4 dans la mesure où elles ne sont pas contraires ou ne contredisent pas ce qui suit.

Les références utilisées dans les figures 5 à 7 et déjà utilisées dans les figures 4 et 5 désignent donc des éléments identiques ou similaires.

Le solaire 7 est similaire à celui décrit dans ce qui précède et est centré et guidé en rotation dans le porte-satellites 10 par l'intermédiaire d'un palier à roulement 23 qui comprend ici deux bagues 23a, 23b entre lesquelles sont disposées deux rangées adjacentes de billes 23c.

La bague interne 23a est montée sur une extrémité axiale du solaire 7 et sa bague externe 23b est montée dans la paroi interne 20 du porte-satellites 10.

Le porte-satellites 10 est lui-même centré et guidé en rotation dans un porte-couronne 34 par l'intermédiaire d'un palier 36 qui peut être à roulement et qui comprend par exemple des rouleaux. Le palier 36 est situé sur la portion d'arbre 15 du porte-satellites 10, par exemple sensiblement en son milieu.

Le palier 36 peut comprendre une bague interne montée sur la portion d'arbre 15 ou bien directement intégrée à celle-ci. De la même façon, la bague externe du palier 36 peut être montée dans le porte-couronne 34 ou intégrée à ce dernier.

Dans l'exemple représenté, le porte-couronne 34 a une forme générale annulaire autour de l'axe X, et s'étend axialement autour d'une partie de la portion d'arbre 15 et autour de la couronne 9.

Le porte-couronne 34 comprend pour l'essentiel deux parties axiales, à savoir une partie amont tronconique 34a et une partie aval cylindrique 34b.

La partie tronconique 34a est évasée vers l'aval et son extrémité amont de plus petit diamètre s'étend autour du palier 36 afin de le supporter. On comprend ainsi que le porte-couronne 34 a une fonction de support du palier 36.

La partie cylindrique 34b a un diamètre moyen D3 mesuré par rapport à l'axe X. D1 est le diamètre moyen de la denture 28 et D2 est le diamètre moyen de la denture 32. D1 est inférieur à D2 dans l'exemple représenté, D1 et D2 étant mesurés par rapport à l'axe Y des satellites 8.

La partie cylindrique 34b comprend un rebord annulaire 38 s'étendant radialement vers l'extérieur et formant une bride annulaire de fixation du porte-couronne 34 à un stator de la turbomachine. Ce rebord 38 comprend par exemple une rangée annulaire d'orifices (non représentés) qui ont chacun une orientation axiale et qui sont configurés pour recevoir des vis de fixation.

A la jonction entre les parties tronconique 34a et cylindrique 34b, le porte-couronne 34 comprend une butée annulaire 40 qui s'étend radialement vers l'intérieur. Cette butée 40 se présente sous la forme d'un bossage annulaire en saillie. Cette butée 40 est située à une extrémité axiale, ici amont, de la couronne 9 et s'étend axialement en regard de cette couronne afin que la couronne puisse prendre appui sur la butée 40.

La butée 40 comprend une face radiale aval 40a d'appui de l'extrémité amont de la couronne 9 (figure 6). Dans l'exemple représenté, la butée 40 a en section axiale une forme générale triangulaire et comprend donc une face 40b à l'amont qui est inclinée et évasée de l'aval vers l'amont vers l'extérieur. La partie cylindrique 34b du porte-couronne 34 comprend des cannelures internes 42 dans lesquelles sont engagées des cannelures externes 44 complémentaires de la couronne 9. Dans l'exemple représenté, les cannelures externes 44 de la couronne 9 s'étendent sur toute la dimension axiale de la couronne 9, comme sa denture interne 9d, et les cannelures internes 42 de la partie cylindrique 34b s'étendent sur au moins 80% de la dimension axiale de cette partie.

Les cannelures internes 42 sont reliées à la face 40a de la butée 40 par une rainure annulaire 46 formée dans le porte-couronne 34, à la base ou à la périphérie externe de la butée 40. Cette rainure 46 peut être orientée radialement et déboucher radialement vers l'intérieur, ou bien être inclinée et déboucher radialement vers l'intérieur, en étant orientée d'amont en aval vers l'intérieur, comme dans l'exemple représenté à la figure 6.

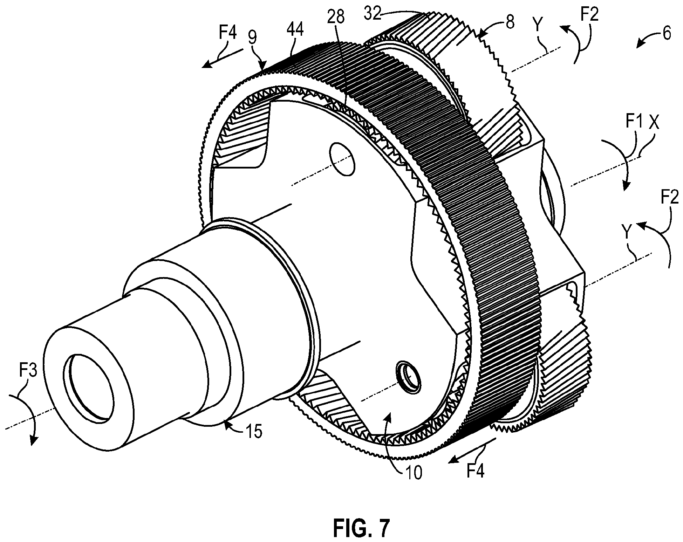

Selon l'invention mieux visible à la figure 7, les cannelures 42, 44 sont hélicoïdales et sont aptes à coulisser l'une à l'intérieur de l'autre en direction axiale. On comprend que ce déplacement est similaire à celui d'un vissage du fait des formes hélicoïdales des cannelures.

Le sens d'enroulement des hélices des cannelures 42, 44 est important et dépend du sens de rotation des satellites 8 autour de leurs axes. En effet, il faut que les cannelures 42, 44 soient configurées pour qu'en fonctionnement la couronne 9 soit sollicitée axialement vers l'amont et puisse donc être maintenue contre la butée 40. Le choix du sens d'enroulement des cannelures 42, 44 en fonction du sens de rotation des satellites 8 est à la portée d'un homme du métier.

Dans l'exemple particulier représenté à la figure 7, le solaire 7 tourne autour de l'axe X dans le sens de la flèche F1. Il entraîne les satellites 8 autour des axes Y dans le sens des flèches F2, qui entraînent à leur tour le porte-satellites 10 autour de l'axe X dans le sens de la flèche F3. Grâce à ses cannelures hélicoïdales 44, la couronne 9 est sollicitée axialement dans le sens des flèches F4.

Pour éviter une usure de la butée 40 ou de la couronne 9 (par exemple une usure du type *fretting*), il est possible de recouvrir sa face 40a d'un revêtement de protection. Ce revêtement peut être un matériau dur, c'est-à-dire plus dur que le matériau de la butée 40, ou un matériau anti-friction.

En variante, ce revêtement pourrait être situé sur la couronne 9, par exemple à son extrémité amont, et coopérer avec la face 40a de la butée 40.

Dans une variante non représentée, un amortisseur à compression de film d'huile pourrait équiper le porte-couronne 34 et être de préférence monté autour de la couronne 9. Cet amortisseur aurait pour fonction d'amortir les vibrations auxquelles la couronne 9 serait soumise en fonctionnement.

Du côté opposé à la butée 40, c'est-à-dire à l'aval dans l'exemple représenté, la couronne 9 est maintenue axialement vis-à-vis du porte-couronne 34 par l'intermédiaire d'un anneau 50 fendu de verrouillage, mieux visible à la figue 6. L'anneau 50 est engagé dans une gorge annulaire 52 radialement interne du porte-couronne 34, qui est ici formée à l'extrémité aval libre du porte-couronne 34.

## Revendications

1. Réducteur mécanique (6) de turbomachine (1), en particulier d'aéronef, ce réducteur comportant :
- un solaire (7) ayant un axe (X) de rotation et comportant une denture externe (7a),
- une couronne (9) qui s'étend autour du solaire (7) et qui comporte une denture interne (9d), la couronne (9) étant entourée par un porte-couronne (34) qui est destiné à être immobile en rotation autour de l'axe (X) en utilisation,
- des satellites (8) qui sont engrenés avec le solaire (7) et la couronne (9) et qui comportent chacun une première denture (32) de diamètre moyen D2 engrenée avec la denture (7a) du solaire (7), et une seconde denture (28) de diamètre moyen D1, différent de D2, engrenée avec la denture interne (9d) de la couronne (9), les satellites (8) étant maintenus par un porte-satellites (10) qui est destiné à être mobile en rotation autour de l'axe (X) en utilisation, le porte-couronne (34) comprenant une butée axiale annulaire (40) sur laquelle la couronne (9) est configurée pour prendre appui, et la couronne (9) comprenant des cannelures externes (44) qui sont engagées dans des cannelures internes (42) complémentaires du porte-couronne (34)
**caractérisé en ce que** les dites cannelures externes sont hélicoïdales et configurées pour coopérer par glissement avec ces cannelures internes (42) de façon à forcer le maintien de la couronne (9) contre la butée (40) en fonctionnement.

2. Réducteur (6) selon la revendication 1, dans lequel le porte-couronne (34) comprend un support de palier (36) monté sur une portion d'arbre (15) du porte-satellites (10), le support de palier (36) recevant un palier de guidage en rotation de la portion d'arbre (15) du porte-satellites (10).

3. Réducteur (6) selon la revendication 2, dans lequel la butée (40) et la portion d'arbre (15) sont situés d'un même côté par rapport aux satellites (8).

4. Réducteur (6) selon l'une des revendications précédentes, dans lequel le porte-couronne (34) comprend une paroi cylindrique (34b) comportant lesdites cannelures internes (44) et une paroi tronconique (34a) dont l'extrémité de plus grand diamètre est reliée à cette paroi cylindrique (34b), ladite butée (40) étant située dans une zone de liaison des parois tronconique (34a) et cylindrique (34b).

5. Réducteur (6) selon la revendication précédente, dans lequel la paroi cylindrique (34b) est reliée à un rebord annulaire (38) s'étendant radialement vers l'extérieur et formant une bride de fixation.

6. Réducteur (6) selon la revendication précédente, dans lequel le rebord annulaire (38) s'étend dans un plan perpendiculaire audit axe (X) et qui passe sensiblement par le milieu de la couronne (9) et par le milieu d'un palier (23) monté entre le porte-satellites (10) et le solaire (7).

7. Réducteur (6) selon l'une des revendications précédentes, dans lequel la butée (40) est formée par un bossage annulaire radialement interne du porte-couronne (34).

8. Réducteur (6) selon l'une des revendications précédentes, dans lequel le bossage comprend une face radiale (40a) d'appui de la couronne (9), cette face radiale (40a) étant reliée aux cannelures internes (42) du porte-couronne (34) par une rainure annulaire (46).

9. Réducteur (6) selon la revendication précédente, dans lequel la face radiale (40a) est recouverte d'un revêtement de protection ou est destinée à coopérer avec un revêtement de protection situé sur la couronne (9).

10. Réducteur (6) selon l'une des revendications précédentes, dans lequel, du côté opposé à la butée (40), la couronne (9) est maintenue axialement vis-à-vis du porte-couronne (34) par l'intermédiaire d'un anneau (50) fendu de verrouillage qui est engagé dans une gorge annulaire (52) radialement interne du porte-couronne (34).

11. Réducteur (6) selon la revendication précédente, dans lequel la gorge (52) et l'anneau (50) sont situés au niveau d'une extrémité axiale libre du porte couronne, et en particulier de sa paroi cylindrique (34b).

12. Réducteur (6) selon l'une quelconque des revendications précédentes, dans lequel le porte-couronne (34) comprend un amortisseur à compression de film d'huile qui entoure au moins en partie ladite couronne (9).

13. Réducteur (6) selon l'une des revendications précédentes, dans lequel les cannelures internes (42) du porte-couronne (34) et les cannelures externes (44) de la couronne (9) s'étendent sur toute la dimension axiale de la couronne (9).

14. Turbomachine (1) d'aéronef, comportant un réducteur (6) selon l'une des revendications précédentes.

## Patentansprüche

1. Mechanisches Untersetzungsgetriebe (6) für ein Turbotriebwerk (1), insbesondere eines Luftfahrzeugs, wobei dieses Untersetzungsgetriebe umfasst:
- ein Sonnenrad (7), das eine Drehachse (X) aufweist und eine Außenverzahnung (7a) beinhaltet,
- ein Hohlrad (9), das sich um das Sonnenrad (7) herum erstreckt, und das eine Innenverzahnung (9d) umfasst, wobei das Hohlrad (9) von einem Hohlradträger (34) umgeben ist, der dazu bestimmt ist, bei Gebrauch um die Achse (X) herum drehfest zu sein,
- Satellitenräder (8), die mit dem Sonnenrad (7) und dem Hohlrad (9) in Eingriff stehen und die jeweils eine erste Verzahnung (32) mit einem mittleren Durchmesser D2 umfassen, die mit der Verzahnung (7a) des Sonnenrades (7) in Eingriff steht, und eine zweite Verzahnung (28) mit einem mittleren Durchmesser D1, der sich von D2 unterscheidet, der mit der Innenverzahnung (9d) des Hohlrades (9) in Eingriff steht, wobei die Satelliten (8) durch einen Satellitenträger (10) gehalten werden, der dazu bestimmt ist, bei Gebrauch um die Achse (X) drehbeweglich zu sein, wobei der Hohlradträger (34) einen ringförmigen axialen Anschlag (40) umfasst, an dem anzuliegen das Hohlrad (9) konfiguriert ist, und das Hohlrad (9) eine äußere Kerbverzahnung (44) umfasst, die mit der ergänzenden inneren Kerbverzahnung (42) des Hohlradträgers (34) in Eingriff stehen, **dadurch gekennzeichnet, dass** die äußere Kerbverzahnung spiralförmig ist und konfiguriert ist, um durch Gleiten mit dieser inneren Kerbverzahnung (42) zusammenzuwirken, um im Betrieb den Halt des Hohlrades (9) am Anschlag (40) zu forcieren.

2. Untersetzungsgetriebe (6) nach Anspruch 1, wobei der Hohlradträger (34) einen Lagerbock (36) umfasst, der auf einem Wellenabschnitt (15) des Satellitenträgers (10) montiert ist, wobei der Lagerbock (36) ein Drehführungslager des Wellenabschnitts (15) des Satellitenträgers (10) aufnimmt.

3. Untersetzungsgetriebe (6) nach Anspruch 2, wobei sich der Anschlag (40) und der Wellenabschnitt (15) auf einer gleichen Seite in Bezug zu den Satelliten (8) befinden.

4. Untersetzungsgetriebe (6) nach einem der vorstehenden Ansprüche, wobei der Hohlradträger (34) eine zylindrische Wand (34b) umfasst, welche die innere Kerbverzahnung (44) umfasst und eine kegelstumpfförmige Wand (34a), deren Ende mit dem größeren Durchmesser mit dieser zylindrischen Wand (34b) verbunden ist, wobei sich der Anschlag (40) in einer Verbindungszone der kegelstumpfförmige (34a) und zylindrischen Wand (34b) befindet.

5. Untersetzungsgetriebe (6) nach dem vorstehenden Anspruch, wobei die zylindrische Wand (34b) mit einem ringförmigen Rand (38) verbunden ist, der sich radial nach außen erstreckt und einen Befestigungsflansch bildet.

6. Untersetzungsgetriebe (6) nach dem vorstehenden Anspruch, wobei sich der ringförmige Rand (38) in einer zur Achse (X) senkrechten Ebene erstreckt, und die im Wesentlichen durch die Mitte des Hohlrades (9) und durch die Mitte eines Lagers (23) verläuft, das zwischen dem Satellitenträger (10) und dem Sonnenrad (7) montiert ist.

7. Untersetzungsgetriebe (6) nach einem der vorstehenden Ansprüche, wobei der Anschlag (40) durch einen radial innen liegenden ringförmigen Buckel des Hohlradträgers (34) gebildet wird.

8. Untersetzungsgetriebe (6) nach einem der vorstehenden Ansprüche, wobei der Buckel eine radiale Seite (40a) zum Anliegen des Hohlrades (9) umfasst, wobei diese radiale Seite (40a) durch eine ringförmige Nut (46) mit der inneren Kerbverzahnung (42) des Hohlradträgers (34) verbunden ist.

9. Untersetzungsgetriebe (6) nach dem vorstehenden Anspruch, wobei die radiale Seite (40a) mit einer Schutzbeschichtung überdeckt ist, oder dazu bestimmt ist, mit einer Schutzbeschichtung zusammenzuwirken, die sich auf dem Hohlrad (9) befindet.

10. Untersetzungsgetriebe (6) nach einem der vorstehenden Ansprüche, wobei das Hohlrad (9) auf der entgegengesetzten Seite des Anschlags (40) anhand eines Spaltringes (50) zum Verriegeln axial gegenüber dem Hohlradträger (34) gehalten wird, der in einer ringförmigen Nut (52) radial innerhalb des Hohlradträgers (34) in Eingriff steht.

11. Untersetzungsgetriebe (6) nach dem vorstehenden Anspruch, wobei sich die Nut (52) und der Ring (50) im Bereich eines freien axialen Endes des Hohlradträgers, und insbesondere seiner zylindrischen Wand (34b) befinden.

12. Untersetzungsgetriebe (6) nach einem der vorstehenden Ansprüche, wobei der Hohlradträger (34) einen Ölfilm-Kompressionsdämpfer umfasst, der das Hohlrad (9) zumindest teilweise umgibt.

13. Untersetzungsgetriebe (6) nach einem der vorstehenden Ansprüche, wobei sich die innere Kerbverzahnung (42) des Hohlradträgers (34) und die äußere Kerbverzahnung (44) des Hohlrades (9) über die gesamte Abmessung des Hohlrades (9) erstrecken.

14. Turbotriebwerk (1) eines Luftfahrzeugs, das ein Untersetzungsgetriebe (6) nach einem der vorstehenden Ansprüche umfasst.

## Claims

1. A mechanical reduction gear (6) of a turbomachine (1), in particular of an aircraft, this reduction gear comprising:
- a sun gear (7) having an axis (X) of rotation and comprising an external toothing (7a),
- a ring gear (9) which extends around the sun gear (7) and which comprises an internal toothing (9d), the ring gear (9) being surrounded by a ring gear carrier (34) which is intended to be immobile in rotation about the axis (X) in use,
- planet gears (8) which are in mesh with the sun gear (7) and the ring gear (9) and which each comprise a first toothing (32) of mean diameter D2 meshed with the toothing (7a) of the sun gear (7), and a second toothing (28) of mean diameter D1, different from D2, meshed with the internal toothing (9d) of the ring gear (9), the planet gears (8) being held by a planet carrier (10) which is intended to be movable in rotation about the axis (X) in use,
the ring gear carrier (34) comprising an annular axial abutment (40) on which the ring gear (9) is configured to bear, and the ring gear (9) comprising external splines (44) which are engaged in complementary internal splines (42) of the ring gear carrier (34), **characterized in that** said external splines are helical and configured to co-operate by sliding with these internal splines (42) so as to force the ring gear (9) to be held against the abutment (40) during operation.

2. The reduction gear (6) according to claim 1, wherein the ring gear carrier (34) comprises a bearing support (36) mounted on a shaft portion (15) of the planet carrier (10), the bearing support (36) receiving a bearing for rotationally guiding the shaft portion (15) of the planet carrier (10).

3. The reduction gear (6) according to claim 2, wherein the abutment (40) and the shaft portion (15) are located on the same side with respect to the planet gears (8).

4. The reduction gear (6) according to one of the preceding claims, wherein the ring gear carrier (34) comprises a cylindrical wall (34b) comprising said internal splines (44) and a frustoconical wall (34a) whose larger diameter end is connected to this cylindrical wall (34b), said abutment (40) being located in a connecting zone of the frustoconical (34a) and cylindrical (34b) walls.

5. The reduction gear (6) according to the preceding claim, wherein the cylindrical wall (34b) is connected to an annular edge (38) extending radially outwards and forming a fixing flange.

6. The reduction gear (6) according to the preceding claim, wherein the annular edge (38) extends in a plane perpendicular to said axis (X) and which passes substantially through the centre of the ring gear (9) and through the centre of a bearing (23) mounted between the planet carrier (10) and the sun gear (7).

7. The reduction gear (6) according to one of the preceding claims, wherein the abutment (40) is formed by a radially inner annular boss of the ring gear carrier (34).

8. The reduction gear (6) according to one of the preceding claims, wherein the boss comprises a radial face (40a) for supporting the ring gear (9), this radial face (40a) being connected to the internal splines (42) of the ring gear carrier (34) by an annular groove (46).

9. The reduction gear (6) according to the preceding claim, wherein the radial face (40a) is covered with a protective coating or is intended to cooperate with a protective coating located on the ring gear (9).

10. The reduction gear (6) according to one of the preceding claims, wherein, on the side opposite the abutment (40), the ring gear (9) is held axially opposite the ring gear carrier (34) by means of a split locking ring (50) which is engaged in a radially inner annular groove (52) of the ring gear carrier (34).

11. The reduction gear (6) according to the preceding claim, wherein the groove (52) and the ring (50) are located at a free axial end of the ring gear carrier, and in particular its cylindrical wall (34b).

12. The reduction gear (6) according to any of the preceding claims, wherein the ring gear carrier (34) comprises an oil film compression damper which at least partially surrounds said ring gear (9).

13. The reduction gear (6) according to any of the preceding claims, wherein the internal splines (42) of the ring gear carrier (34) and the external splines (44) of the ring gear (9) extend over the entire axial dimension of the ring gear (9).

14. An aircraft turbomachine (1) comprising a reduction gear (6) according to one of the preceding claims.
